# EUROPEAN PATENT APPLICATION

(11) **EP 1 818 701 A1**
(43) Date of publication of application: **15.08.2007**
(21) Application number: 06270012.5
(22) Date of filing: 09.02.2006
(51) Int. Cl.: G02B 6/42

(54) **Opto-electronic interface**

(71) Applicant: BAE Systems PLC, London SW1Y 5AD (GB)
(72) Inventor: Chandler, Nicholas BAE SYSTEMS adv. Tech. Centre, Chelmsford, Essex, CM2 8HN (GB); Griffith, Michael Stewart BAE SYSTEMS adv., Chelmsford, Essex, CM2 8HN (GB); McCarthy, Andrew Graham BAE SYSTEMS adv., Chelmsford, Essex, CM2 8HN (GB); Sleep, Paul Dennis BAE SYSTEMS adv., Chelmsford, Essex, CM2 8HN (GB)
(74) Representative: BAE SYSTEMS plc Group IP Department

(57) **Abstract**

A compact opto-electronic interfacing device is provided for surface-mounting on a circuit board, comprising a substrate having one or more optical waveguides formed in an optical waveguide layer of the substrate, an optical connector attached to the substrate and optically aligned to one or more of the optical waveguides and an integrated mirror formed on an inclined edge of the substrate and angled to reflect optical signals entering or emerging from said one or more optical waveguides. More than one integrated mirror may be provided on edges of the substrate according to the pattern of waveguides within. Preferably, the waveguides form an optical splitter/combiner.

## Description

This invention relates to opto-electronic interfaces, and in particular to elements of a compact opto-electronic assembly.

To split or combine optical beams (which carry signals) of different wavelengths, the beams must pass through hardware devices (splitters or combiners) which are typically made from a number of optical fibres or from optical waveguides, the latter typically consisting of a pattern made in a thin optical layer on a suitable substrate. The radius of any curves in the pattern, either fibres or waveguides, must be larger than a critical value, otherwise significant (unacceptable) loss of light occurs. This limits the extent to which the size of the splitters, combiners and any connecting fibres may be reduced.

The alignment of opto-electronic devices, e.g. emitters and detectors, to fibres or to waveguides, must be done with precision in order that light is efficiently passed between the opto-electronic device and the fibre or waveguide. One known solution to this is to attach optical fibres to each opto-electronic device and to connect the optical fibres together as required for a given configuration of devices. However, such an arrangement occupies significant space, even when the fibres can be arranged to be substantially straight.

From a first aspect, the present invention resides in a compact opto-electronic interfacing device for surface-mounting on a circuit board, comprising:
a substrate having one or more optical waveguides formed in an optical waveguide layer of the substrate;
optical connector means attached to the substrate and optically aligned to one or more of the optical waveguides; and
an integrated mirror formed on an inclined edge of the substrate and angled to reflect optical signals entering or emerging from said one or more optical waveguides.

Preferably, the one or more waveguides form an optical splitter/combiner.

In a preferred embodiment, the optical waveguide layer is disposed on or close to a surface of the substrate, at least in the region of the integrated mirror, so that optical signals are reflected by the integrated mirror substantially at an edge of the substrate. This has the advantage that during alignment and mounting of the device on a circuit board, visible light light passed through the device may be used to visually align the device with corresponding opto-electronic components, a substantial portion of those components being visible beyond the end of the substrate. However, not all of the waveguide layer needs to be close to the surface of the substrate to achieve this advantage.

In a preferred embodiment of the present invention, the inclined face is substantially straight-edged. However, the inclined face may alternatively comprise a plurality of straight-edged sections or it may be curved. More than one integrated mirror may be provided on different parts of the substrate and each mirror may be applied to an inclined edge of the same or different shape.

In preferred embodiments of the present invention, multiple optical signals may be sent in one or both directions in a single optical fibre, there being a multiplicity of optical emitters and / or detectors. Multiplexing may be achieved either by time-division (typically using one optical wavelength) or by a technique known as Coarse Wavelength Division Multiplexing in which different optical wavelengths and corresponding optical filters are used to avoid interference and crosstalk. In the present invention such features may be implemented in a very compact package.

Preferred embodiments of the present invention will now be described by way of example only and with reference to the accompanying drawings, of which:
Figure 1 is a sectional view of an opto-electronic interfacing device according to a preferred embodiment of the present invention, shown mounted on a circuit board;
Figure 2 is a perspective view the interfacing device, unmounted; and
Figure 3 is a sectional view of the interfacing device mounted on a circuit board, viewed from one end of the device.

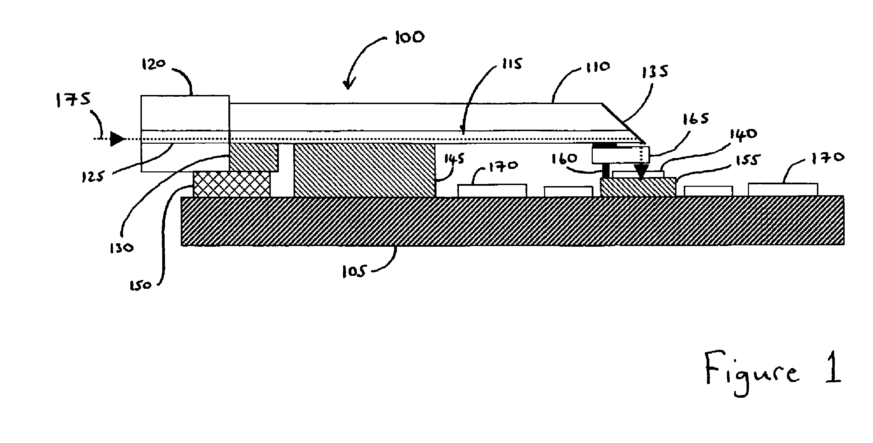

A compact opto-electronic interfacing device according to a preferred embodiment of the present invention will now be described firstly with reference to Figure 1. While preferred embodiments of the present invention will, for simplicity, discuss the device in the context of an optical input and a number of optical outputs, the device is intended to be used for bidirectional optical signals so that what is referred to as an input may in practice also be used as an output.

Referring to Figure 1, a diagram is shown representing a sectional view of the preferred opto-electronic interfacing device 100 mounted on a section of a printed circuit board (PCB) 105. The interfacing device 100 comprises a portion 110 of optical substrate, made from a polymer material for example, with an optical splitter, preferably a one-to-four way optical splitter having one optical input waveguide to four optical output waveguides, formed within a thin optical waveguide layer 115 of between 10 and 100 microns thick provided on or, if within, close to one surface of the optical substrate 110. Of course, the optical splitter may operate both as an optical splitter and an optical combiner where the signals are bidirectional; in the latter case the four output waveguides are used as inputs and the single input waveguide is used as an output for a combined optical signal. In what follows, all references to an input waveguide and an output waveguide are to be interpreted as being intended for bidirectional use, so that, in operation, input waveguides are used also as output waveguides.

The input waveguide to the splitter terminates at one end of the optical waveguide layer 115 and the four output waveguides from the splitter terminate at the opposite end of the layer 115. A modified standard optical connector ferrule 120 having at least one optical fibre section 125 running through it is bonded to that end of the optical substrate 110 where the single input waveguide to the splitter terminates. The end of the optical fibre section 125 within the ferrule 120 is precisely optically aligned with the single input waveguide to the splitter. The optical connector ferrule 120 thereby provides a standard optical connection point to the device 100. Preferably, a block 130 made of a similar polymer material to that of the optical substrate 110, for example, is bonded to the surface of the waveguide layer 115/optical substrate 110 at that same end to provide a larger bonding and supporting surface for the ferrule 120.

At the end of the optical substrate 110 where the four output waveguides from the splitter terminate, the end face of the optical substrate 110 and the waveguide layer 115 is cut to form an inclined face at an angle of substantially 45° to the waveguide layer 115 in a single straight edge, a number of connected straight edges or a curved edge, according to which is most convenient for the chosen optical waveguide pattern, and a mirror finish is applied to that end face to form an integrated mirror 135. Light emerging from the optical waveguide layer 115 is reflected by the integrated mirror 135 through substantially 90° from the plane of the waveguide layer 115 so that the light may, once the interfacing device 100 is mounted on the PCB 105, be aligned to strike corresponding opto-electronic components 140 surface-mounted on the PCB 105. Similarly, light emitted by such components 140 and directed towards the interfacing device 100 is reflected into the waveguide layer 115 by the integrated mirror 135.

Of course, the inclined face may be cut at an angle other than 45° if required to give a different angle of emergence or entry of optical signals from or into the optical waveguide layer 115. Furthermore, whereas the embodiment being described with reference to Figure 1 has a single integrated mirror 135, further separate integrated mirrors 135 may be provided on other parts of the optical substrate 110, according to the pattern of waveguides within the waveguide layer 115.

The interfacing device 100, in particular the optical substrate 110, is bonded to and separated from the PCB 105 by means of a spacer 145, preferably made from a material than is transparent to ultra-violet (UV) light, for example glass. A UV light flash-cured adhesive is used to bond the spacer 145 to the optical substrate 110, preferably after first bonding the spacer 145 to the PCB 105. Use of UV light flash-cured adhesive provides a convenient way to quickly fix the position of the interfacing device 100 after careful alignment with the opto-electronic components 140. The spacer 145 is UV-transparent and preferably made wider than the optical substrate 110 so that it can receive the UV light more effectively once the interfacing device 100 is placed onto the spacer 145 for alignment and mounting. In practice, the spacer 145 may be supplied already bonded to the interfacing device 100. For increased stability, the block 130 and at least a part of the optical connector ferrule 120 may also be bonded to the PCB 105 by a layer of adhesive 150 during mounting. The spacer 145 ensures that the optical waveguide layer 115 is positioned at the most appropriate distance above the opto-electronic components 140. The opto-electronic components 140 may themselves be mounted on a carrier 155 which may be flat or stepped, i.e. of a different thickness for each component 140 according to the relative sizes of the components 140. The carrier 155 may in practice be supplied along with the interfacing device 100. Moreover, a carrier supplied with the interfacing device 100 may be provided with opto-electronic components 140 already mounted thereon. One or more precisely-sized spacers 160 may attached to the carrier 155, for example if stepped, one precise spacer 160 for each step of the carrier 155 or one spacer 160 of the width of the optical substrate 110 cut to the stepped profile of the stepped carrier 155, to maintain a precise distance between the optical waveguide layer 115 and the optical components 140. The ability to place the different opto-electronic components 140 at precise and, if necessary, at different distances from the optical waveguide layer 115 is an essential part of achieving good optical performance. Filters 165 may be provided between the optical waveguide layer 115 and the opto-electronic components 140 to, for example, reduce interference and crosstalk between signals 175 of different wavelength. Such filters 165 may optionally be permanently attached to and be provided as part of the interfacing device 100.

Advantageously, the opto-electronic components 140 may be mounted in their required positions on the carrier 155 before mounting of the carrier 155 onto the PCB 105. Once mounted on the carrier 155 the opto-electronic components 140 may be inspected (e.g. for location and orientation accuracy) and tested (electrically and/or optically) before they are committed to the PCB 105 which will carry the interfacing device 100 and other items, e.g. other electronic components 170 associated with the opto-electronic components 140. Other electronic devices, such as drivers or amplifiers, may also be mounted on the carrier 155 before attaching it to the PCB 105.

The optical waveguide layer 115 is very thin (tens of microns) and may be provided, advantageously, on or close to the surface of the optical substrate 110 that faces the PCB 105 when the interfacing device 100 is mounted thereon. In that configuration, the points at which light emerging from the output waveguides are reflected from the integrated mirror 135 are very close to the end of the optical substrate 110. Advantageously, if visible light can be introduced into the input waveguide of the interfacing device 100 during mounting of the interfacing device 100 on the PCB 105, the points of reflection of light close to the edge of the integrated mirror 135 can be visually aligned to the corresponding opto-electronic components 140 (half of each opto-electronic component 140 being visible beyond the end of the optical substrate 110, viewed from slightly off-vertical) as an aid to positioning the interfacing device 100. When the interfacing device 100 is initially placed above the carrier 155, at a height greater than the final position, the light 175 emanating from each waveguide output of the splitter and reflected off the integrated mirror 135 creates a relatively large pool of light on each respective opto-electronic component 140. As the interfacing device 100 is lowered into place, the pools of light shrink in size, enabling a continuing process of alignment. This aid to alignment is not available in prior art arrangements in which a waveguide may be provided within the PCB substrate itself, rather than being separated from it as in the present invention, and the points of reflection are masked by corresponding opto-electronic components mounted on the surface of the PCB.

While alignment may be achieved entirely visually, using a magnifying device if required, it may also be achieved using machine-vision and non-visible light, e.g. the infrared light that would be used by the waveguide and opto-electronic devices 140 in operation, and may be achieved as part of an automated and possibly active alignment procedure.

Preferably, the optical connector ferrule 120 is a modified standard MT optical connector which would normally have one or more optical fibres emerging from one end of it and a standard format optical connection point at the other. That end of the standard connector from which the fibres emerge is cut, for example by sawing, to leave that part of the ferrule which includes the usual connecting face (i.e. it has the usual characteristics for connection to another ferrule) at one end, and at the other, the cut face with the end of one or more embedded optical fibres showing. The cut is made in that part of the ferrule body in which the fibres are maintained at a precise pitch. The cut end may be polished flat if required to give a good interface to the optical substrate 110 and the terminating input waveguide in the optical waveguide layer 115 to which it will be aligned and bonded. During assembly of the interfacing device 100, the modified connector 120 is aligned to the input waveguide to the splitter within the waveguide layer 115 by passing light 175 through a fibre in the connector 120 (by plugging a mating connector into it) and assessing the amount of light passing into the waveguide, either visually or by a measurement such as received power level. Once aligned, the modified connector 120 is permanently attached to the optical substrate 110 using an adhesive.

Advantageously, attaching a modified connector ferrule 120 as described avoids having to attach loose optical fibres to the optical waveguide layer 115 and makes for a more compact device 100 overall.

Preferably, similar materials are selected for the optical substrate 110 and the PCB 105 in particular, not only to facilitate assembly but also to avoid or to at least minimise differences in coefficients of thermal expansion, minimising stresses within the assembly and hence the risk of the alignment changing.

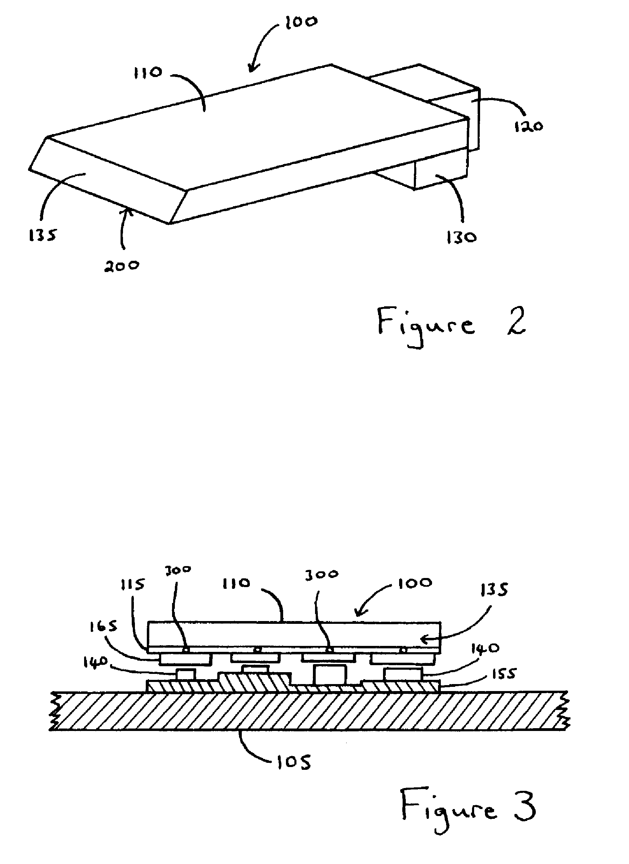

Referring to Figure 2, a perspective view is provided of the interfacing device 100, before mounting on a PCB 105. The optical substrate 110 is of sufficient width and of sufficient length to accommodate the waveguides for an optical splitter/combiner, preferably a one-to-four way optical splitter/combiner, within an optical waveguide layer 115 (not shown in Figure 2). As mentioned above, the 45° end face of the optical substrate on which the integrated mirror 135 is applied may be cut to a straight edge 200 as shown in Figure 2, or it may be cut to form a number of straight-edged portions or a curved edge. Preferably, the carrier 155 is shaped to match the shape of this edge 200 of the optical substrate 110 so that opto-electronic components 140 may be correctly positioned beneath the integrated mirror 135 when the interfacing device 100 is mounted on a PCB 105.

Referring to Figure 3, a sectional view is provided of the interfacing device 100 mounted on a PCB 105, viewed from that end of the optical substrate 110 on which the integrated mirror 135 is formed, the section being taken through the opto-electronic components 140 in a plane perpendicular to the optical waveguide layer 115. The view of Figure 3 shows clearly an optional stepped carrier 155, designed to ensure that differently sized opto-electronic components 140 may be mounted so that a precise spacing may be achieved between them and the waveguide outputs 300 and/or the different optical filters 165. However, the carrier 155 may also be flat rather than stepped.

In order for a completed assembly of an interfacing device and a PCB 105 to be made as compact as possible, "bare" opto-electronic components 140 are used to minimise their width and height and so enable the interfacing device 100 to be mounted as closely as possible to the PCB 105. The more closely together the opto-electronic components 140 can be mounted, the smaller can be the separation of the terminating output waveguides 300 of the optical splitter in the optical waveguide layer 115 and hence the smaller the overall width of the optical substrate 110. Moreover, the smaller the separation of the terminating output waveguides 300 of the optical splitter, the shorter will be the curved waveguide paths for the splitter within the optical waveguide layer 115 for a given (minimum) radius of the waveguide and hence the shorter the section of optical substrate 110 that will be required.

It will be clear to a person of ordinary skill in the art that the different features described above with reference to the accompanying drawings may be applied in various combinations, not necessarily in the specific combinations described, without departing from the intended scope of the present invention. Furthermore, is will be clear that variations in the configuration of features and in the choice of materials as would be apparent to a person skilled in the art are also included within the scope of the present invention.

In particular, whereas the waveguide layer 115 is shown deposed on or close to a surface of the optical substrate 110, it may in practice be embedded more deeply within the substrate 110, not necessarily parallel to a surface of the substrate 110. In that case, light may not necessarily be reflected from the integrated mirror 135 close to an edge of the optical substrate, or at least not for all integrated mirrors 135 if more than one is provided. Preferably, material that is optically transparent at operational wavelengths is used where material is likely to exist in the path between a point of reflection on the integrated mirror and a point at which light emerges from or enters the optical substrate 110. Alternatively, appropriately directed channels may be provided in the optical substrate 110 leading to those points of reflection at the integrated mirror so as not to inhibit the passage of light into or out of the interfacing device 100.

## Claims

1. A compact opto-electronic interfacing device for surface-mounting on a circuit board, comprising:
a substrate having one or more optical waveguides formed in an optical waveguide layer of the substrate;
optical connector means attached to the substrate and optically aligned to one or more of the optical waveguides; and
an integrated mirror formed on an inclined edge of the substrate and angled to reflect optical signals entering or emerging from said one or more optical waveguides.

2. A compact opto-electronic interfacing device according to Claim 1, wherein said one or more waveguides form an optical splitter/combiner.

3. A compact opto-electronic interfacing device according to Claim 1 or Claim 2, further comprising one or more optical filters provided in an optical path for light reflected from, or to be reflected by the integrated mirror.

4. A compact opto-electronic interfacing device according to Claim 1, 2 or 3, wherein the optical waveguide layer is disposed on or close to a surface of the substrate, at least in the region of the integrated mirror, so that optical signals are reflected by the integrated mirror substantially at an edge of the substrate.

5. A compact opto-electronic interfacing device according to any one of the preceding claims, wherein the inclined face of the substrate is at an angle of substantially 45°.

6. A compact opto-electronic interfacing device according to any one of the preceding claims, wherein the inclined face is substantially straight-edged.

7. A compact opto-electronic interfacing device according to any one of claims 1 to 5, wherein the inclined face comprises a plurality of straight-edged sections.

8. A compact opto-electronic interfacing device according to any one of claims 1 to 5, wherein the edge of the inclined face is curved.

9. A compact opto-electronic interfacing device according to any one of the preceding claims, wherein a plurality of separate integrated mirrors are provided on one or more inclined faces of the substrate.

10. A compact opto-electronic interfacing device according to any one of the preceding claims and a carrier for mounting one or more opto-electronic components to be used with the opto-electronic interfacing device.

11. A compact opto-electronic interfacing device according to Claim 10, wherein the carrier is stepped.

12. A compact opto-electronic interfacing device according to any one of the preceding claims, further comprising a spacer for mounting the device onto a circuit board.

13. A compact opto-electronic interfacing device according to Claim 12, wherein the spacer is made from a material transparent to ultra-violet light.
